# EUROPEAN PATENT APPLICATION

(11) **EP 2 410 450 A1**
(43) Date of publication of application: **25.01.2012**
(21) Application number: 10170051.6
(22) Date of filing: 19.07.2010
(51) Int. Cl.: G06F 21/00, G06Q 30/00

(54) **Method for providing a challenge based on a content**

(71) Applicant: Negrea, Dan-Mihai, 32400 Caransebes (RO)
(72) Inventor: Negrea, Dan-Mihai, 32400 Caransebes (RO)

(57) **Abstract**

A method for providing a challenge based on a content is described. One scope of the present invention is to determine if a user is human or an automated agent. Furthermore, the present invention may be used to increase content awareness, such as advertising (e.g., brands, products, slogans) or to test the user knowledge's regarding a content.

A user is presented one or more challenge elements (e.g., inputs, indications, masks). Based on the content, the user is asked to input an answer or to interact with the challenge elements or content.

The invention yields significant reductions in spam and unauthorized access and represent an improvement of existing HIPs or CAPTCHAs.

## Description

### Technical Field

The invention relates generally to computer systems, and more particularly to an improved method for providing a challenge to a user to test if the user is human or to test or increase content awareness.

### Background Art

Scripting, automated scripts or robots allows a malicious user to emulate human interaction with a web site for registering of new accounts with fictitious users names, enables the malicious user to send spam from the new accounts and to avoid spam filtering. Furthermore, malicious users can enter free advertising in comments, chat rooms, forums, etc.

Robots can order products such as tickets, can access personal account information, or any other services. Robots can initiate DOS (Denial Of Service) attacks so that real human are unable to use the service.

A common solution to the problem described above is to use a Human Interactive Proof (HIP) that is designed to be easily solved by humans, but difficult to solve by robots, so that the cost of developing or running a script is unreasonable.

Recently, many HIP systems based on images have been deciphered using automated computer vision techniques (e.g., OCR) by removing noise and segmenting the images. As a response the amount of noise and optical effects has been increased, making harder for human to solve them. These texts based images are also known as CAPTCHA images (acronym for "Completely Automated Public Turing tests to tell Computers and Humans Apart").

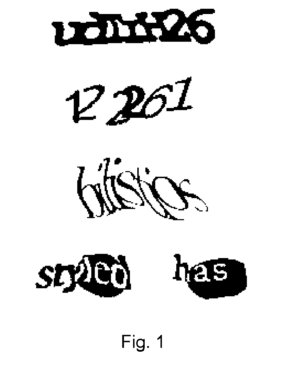

FIG. 1 shows examples of image based CAPTCHAs.

Some of the existing approaches include Gimpy, EZ Gimpy, Pix, Animal Pix, Bongo, Pessimal, BaffleText. Pix and Animal Pix require the user to click on an image(s) that corresponds to a certain tag. Pix and Animal Pix would be very easy to attack if the database is made publicly available. Another critical problem is building the database with a sufficiently large set of classified images, employing of manually categorized images as part of its Turing test challenge.

Bongo, presents a user with two groups of visual patterns, called "LEFT" and "RIGHT". A new visual pattern is shown and the user is asks to decide if it belong to "LEFT" group or "RIGHT" group. If the attacker always chooses "LEFT" it will achieve 50% accuracy.

Audio HIPs are also well known, but the drawback is that speech recognizers are upgraded rapidly. Further information on CAPTCHA is available at www.captcha.net.

Another problem is that online advertising media (e.g., text, banners, multimedia) is often ignored by users. Some media ads are used in order to increase the awareness of a brand or of a certain product among online users. This kind of advertising is commonly remunerated for each impression, by defining a Cost Per Impression (CPM).

What is needed is a system and method that may increase awareness of advertising media. Such a system and method should be able to bring the attention of the user on the advertising content.

### Summary of invention

The solution presented has the potential to overcome the main weaknesses described above. Users are accustomed to read and understand different type of content, typically complex mixture of graphics, colors, logos, images, audio, video, multimedia, texture, transparency, text, links and other elements. A non-limiting example of content is an advertisement whose message generally can be easily and quickly understood. Another example of such content is web content.

In one embodiment, an improved technique for authenticating human presence and preventing the security threat from robots is presented. The user is presented a human-perceptible content. One or more challenge elements are presented. The user is asked to input certain letters, words or to interact with the challenge elements accordingly to the content and the properties of each challenge element.

A challenge may have different type of elements, including but not limited, zero or more inputs, zero or more indications, zero ore more masks. Other elements may be part of a challenge such as links, video or audio content. Hereafter a challenge input element is also referred to as an input, a challenge indication element is also referred to as an indication and a challenge mask element is also referred to as a mask.

Utilization of a method based on a content enables content owners to promote their interests. The user is engaged to read, listen and/or visualize a content and understand the content, or part of it, in order to solve and pass the challenge. As a non limiting example, a challenge element can be generated and presented to highlight one or more words, company names, slogans, features, product names, product images, logos, service names and/or personality. Because it makes full advantage of the cognitive reasoning facilities of human beings the invention may be used to validate that a user is a human or a robot.

Usually, content (e.g., web content) is designed to be easy to read and pleasing to the eye, the user may find the interaction less difficult, or less time consuming as compared with previous challenges (e.g., HIPs or CAPTCHA images presented in FIG. 1).

Advantages and novel features will become apparent from the following detailed description when considered in conjunction with the drawings.

### Brief description of drawings

FIG. 1 shows examples of image based CAPTCHAs;

FIG. 2 is a block diagram generally representing computing environment into which various aspects described herein may be practiced;

FIG. 3 is a block diagram generally representing an exemplary networked computing environment in accordance with an aspect of the present invention;

FIG. 4 is a flowchart generally representing a challenge based on a content;

FIGS. 5 and 6 show illustrative simplified examples of challenges that have input elements and indication elements;

FIG. 7 is a diagram illustrating a challenge where the indications express the sequence of the correct answer;

FIG. 8 is a diagram illustrating one version of a challenge described herein where the content is a CAPTCHA image;

FIGS. 9 and 10 are diagrams illustrating other examples of challenges that require the user to interact with the challenge elements and/or content;

FIG. 11 is a diagram illustrating a simplified example of a challenge that uses a mask element;

FIGS. 12, 13, 14 are diagrams illustrating examples of challenges that are presented to the user as a sequence of steps.

### Detailed description

Various embodiments of the invention are discussed in detail below. While specific implementations are discussed, it should be understood that this is done for illustration purpose only. A person skilled in art will recognize that other components and configurations may be used without parting from the spirit and scope of the invention.

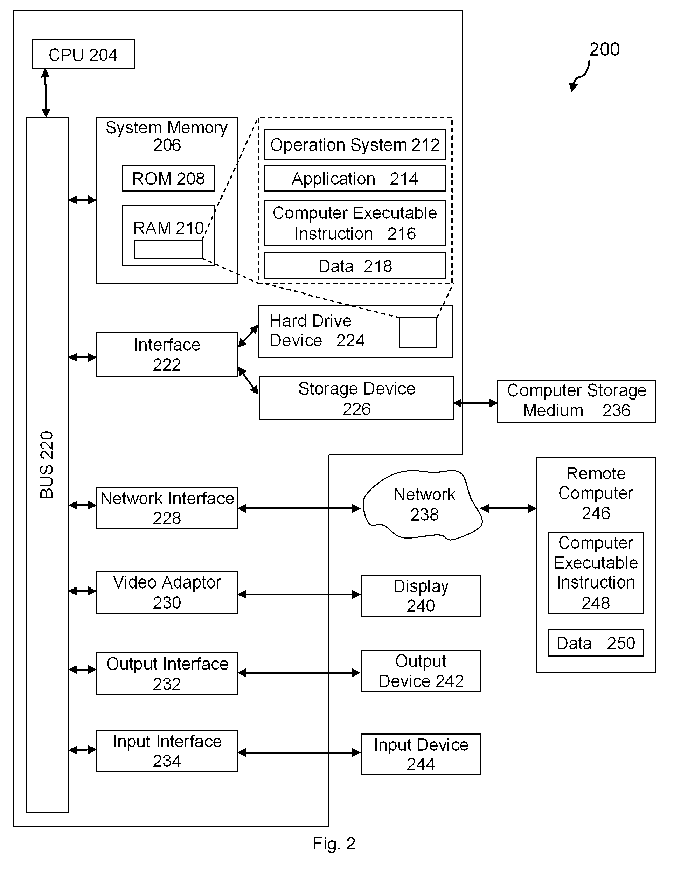

FIG. 2 and the following description are intended to provide a non-limiting example of a general suitable computing environment 200 which may be suitable for implementing embodiments of various aspects of this disclosure. The general computer system 202 may represent: personal computers, server computers, laptop devices, notebook devices, routers, switches, bridges, hand-held devices, mobile phones, smart phones, navigation devices, ATMs (Automated Teller Machine), POS's (Point of Sale), interactive kiosks, facsimile machine, digital music players, tablet devices, pagers, headless servers, multiprocessor systems, microprocessor-based systems, set top boxes, network PCs, minicomputers, mainframe computers, programmable consumer electronics or any other general purpose or special purpose computing system. The present general suitable computing environment may encompass software, firmware, and hardware implementation.

The general computer system 202 illustrated is not intended to suggest any limitation in functionality, configuration, dependency or combination of components on which the claimed subject matter can be implemented. Some components of the general computer system 202 and/or of the remote computer(s) 246 may be implemented within a system-on-a-chip architecture including memory, external interfaces and operating system.

The general computer system 202 may include computer-executable instructions that may be executed to perform any one or more of the methods or functions disclosed herein. Computer-executable instructions can be grouped into program modules including routines, programs, objects, components, data structures and so on. The computer-executable instructions may run in combination with other program modules and/or hardware-implemented functions.

The general computer system 202 may operate as a standalone computer system or may operate in a communications network. Further, the general computer system may also include any combination of systems or sub-systems that operates as standalone or execute jointly instructions and/or share data and/or share peripheral devices. Certain tasks may be executed in distributed computing environments. Computer-executable instructions can be stored locally and/or on remote memory storage devices.

The general computer system 202 may include, but not limited to the following, a CPU (central processing unit) 204, a system memory 206, a bus 220. The bus 220 may include one or more types of bus structures including a memory bus or memory controller, a peripheral bus, and a local bus with any bus architecture. Example of most common bus, not limited to: Standard Architecture (ISA) bus, VESA Local Bus (VLB), Micro Channel Architecture (MCA) bus, Enhanced ISA (EISA) bus, Peripheral Component Interconnect (PCI) bus and Peripheral Component Interconnect Express (PCI Express) bus.

A variety of computer-readable media may be used in a general computer system 202, including both volatile and nonvolatile media in any method or technology. Computer-readable media can comprise computer storage media and communication media. Computer storage media may be removable and non-removable media for storage of information like instructions, data structures, program modules or any type of data. Communication media may include information like instructions, data structures, program modules or any type of data in any form of data signals including modulated data signal. Common forms of computer-readable media includes, for example, but is not limited to, CD-ROM, Digital Versatile Disc DVD (formerly Digital Video Disc), Blu-ray disc, or other optical disk storage, floppy disk, flexible disk, magnetic tape, magnetic disk storage, hard disk or any other magnetic storage medium, punch cards, paper tape or any other physical medium with patterns of holes, RAM, ROM, PROM, EPROM, EEPROM, flash memory, solid state disk or any other memory technology, wired media, wireless media, carrier wave, or any other medium which can be accessed to store information by a computer system.

The system memory 206 may include read-only memory (ROM) 208 and/or random access memory (RAM) 210.

The general computer system 202 may include other computer-readable media. As an example, a hard disk drive 224 and a storage device 226 are represented in FIG. 2 and are connected to the bus 220 through the interface 222. The hard disk drive 224 which can, in some situations, be accessed from external devices, reads/writes to non-removable, nonvolatile computer storage media. The storage device 226 may be an optical disk drive or may be a magnetic disk drive that reads/writes to a nonvolatile, removable storage medium 236. Non-limiting examples of such storage medium: magnetic floppy disc (FDD), CD-ROM disc, DVD disc, Blu-ray disc. Other computer storage media can be used, but are not limited to, magnetic tape cassettes, flash memory cards, flash memory hard drives, flash memory sticks, digital video tape, solid state RAM, solid state ROM, zip drives, cartridges, and the like. The interface 222 for external drive implementations may include one or more interface technologies such as Universal Serial Bus (USB), IEEE-1394 or eSATA.

The drives and the computer storage media, described above, provide storage of computer-executable instructions, data structures, program modules or any type of data. In FIG. 2, for example, hard disk drive 224 and RAM 210 are illustrated as storing operating system 212, one or more applications 214, computer-executable instructions 216 and data 218. Other types of media which are readable by a computer may also be used, and further, that any such media may contain computer-executable instructions for performing the methods described herein.

A user may enter commands and information into the general computer system 202 through one or more wired/wireless inputs devices. For simplification, in FIG. 2, is depicted only one of such input devices 244. The input device 244 may include keyboard, numeric keypad, mouse, pointing device, trackball, touch pad tablet, electronic digitizer, IR remote control, joystick, a stylus pen, mid-air input, glove input, motion detector, game pad, microphone, webcam, camera, eye tracking device, scanner, other input devices. Input devices are often connected to the CPU 204 through an input device interface 234 that is coupled to the bus 220, but can be connected by other interfaces, such as a parallel port, a serial port, a game port, an IEEE-1394 port, an eSATA port, a USB port, an IR interface, and so forth. Also, the user may use a virtual keyboard as input.

The general computer system 202 may further include a display 240, such as a liquid crystal display (LCD), a plasma display, a flexible display, an organic light emitting diode (OLED), a light emitting diode (LED) display, a flat panel display, a solid state display, a cathode ray tube (CRT), a projector, a printer or other display devices for outputting information to user. The display may also be connected to the bus 220 via an interface, such as a video adapter 230.

The computer system 202 may operate in a networked environment using a network 238 via wired/wireless communications to one or more remote computers, such as a remote computer 246. By way of example, and not limitation, the remote computer 246 can be a personal computer (PC), a network PC, a server, a router, a peer device or any network node. The network 238 may include local area network (LAN), wide area network (WAN), metropolitan area network (MAN), virtual private network (VPN), Internet, or other type of network. In a networked environment, computer-executable code and data may be stored and/or executed in the remote computer 246. By way of example, and not limitation, FIG. 2 depicts computer-executable instruction(s) 248 and data 250 stored on remote computer 246. Transmission or reception over the network 238 usually is done via a network interface 228. The network interface 228 may be a part of the processor 204 or may be a separate component. The communication interface 228 may be created in software and/or by physical connection in hardware. Any means of establishing a communication link between the general computer system 202 and remote computers may be used.

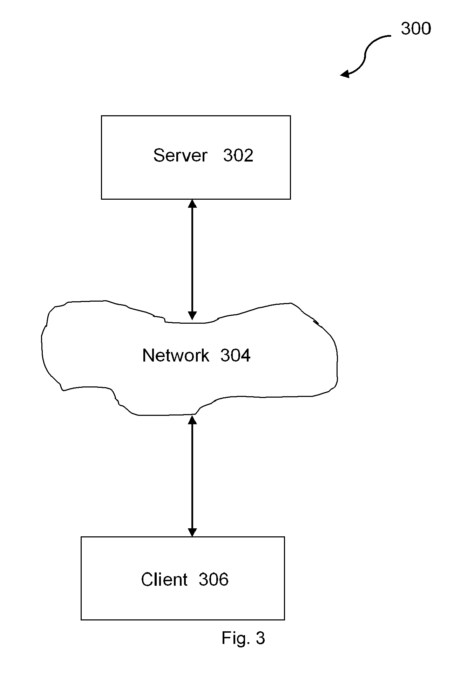

In FIG. 3 is illustrated a block diagram generally representing an exemplary networked computing environment 300. The networked computing environment 300 includes one or more servers 302. The server 302 may be a general computer system 202 presented in FIG. 2 and/or may be software like threads, processes, applications.

The networked computing environment 300 includes a network 304 that may be used to facilitate communications between the server(s) 302 and client(s) 306. The network 304 may be any type of network such as a local area network (LAN), a wide area network (WAN), wireless network (e.g., cellular phone network, WI-FI, Bluetooth(TM)), wired network (e.g., Ethernet), or other type of network. Network 304 may be implemented as a single network or a combination of multiple networks. In one example, the communication between a client 306 and a server 302 can be in the form of a data packet that may include cookies, display resolution, language information and other contextual information.

The networked computing environment 300 includes one or more client(s) 306. The client(s) 306 may be a general computer system 202 presented in FIG. 2 and/or may be software like threads, processes, applications, web browser.

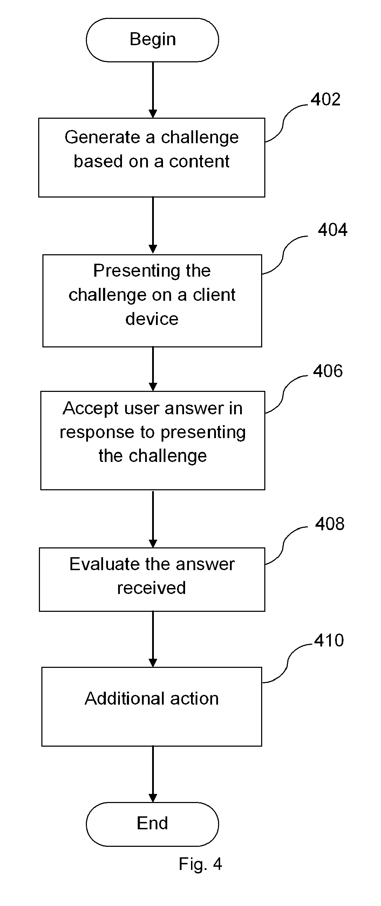

FIG. 4 presents a flowchart generally representing the steps undertaken in some embodiments. Those skilled in the art will appreciate that the functionality implemented within the illustrated blocks may be implemented as separate components or the functionality of several or all of the blocks may be implemented within a single component.

At step 402, a challenge may be generated. In an embodiment, the generation may consist in creating at least one challenge element based on a content. Furthermore, the generation may consist in determining properties of a challenge based on a content. A challenge property can be the number of elements, the type of elements, presentation procedure, validation procedure, elements properties. By way of example, and not limitation, the position, the shape, the orientation, the size, the components, the style (e.g., font color, font style, font size, font weight, spacing style, background color, background image, border style, padding style), the stack order, the visibility, the alternative text and other properties of a challenge element can be established.

The generation step may have some degree of knowledge of the data contained in the content. For example, the position of some words and the word themselves may be sufficient to generate a challenge. Furthermore, the generation of the challenge may be based partial or fully on random, pseudo-random algorithms, predefined rules and/or policies.

In an embodiment, the step 402 may include generation of one or more challenge input elements. By way of example, and not limitation, one input may be created so that the user may understand that it has to input one or more characters located in the proximity of that input. Those skilled in the art recognize that text inputs can vary in number of letters that can be inputted. By limiting the size of inputs the user may have an indication about how many letters has to enter for a correct answer.

In another embodiment, the step 402 may include generation of one or more challenge indication elements. An indication element may help the user to solve the challenge. An indication can include, for example, one or more letters, words, questions, suggestions, instructions, callouts, signs, connectors (e.g., arrows, lines, arcs, dotted lines, dashed lines), shapes, images, videos, animations, tooltips, links (e.g., hyperlink), any combination of this and other visual or audio elements that can help the user to establish the correct answer. An indication can also include one or more dummy symbols, watermark, translucent shapes, opaque shapes, stylized combination of characters. An indication can have at least a portion of it obscured (e.g., by a translucent shape and/or opaque shape).

The challenge may furthermore contain at least one mask. The mask may be appropriate created so as to increase ability to solve the challenge or increase content awareness. A mask may contain at least in part one or more of the following: advertisement, image, movie, interactive media, multimedia, character, word, animated content, shape, line, arrow, arc, scribble, symbols, translucent area, opaque area, shading, lightning, hatching, pattern, watermark, gradient. Dummy symbols or noise can be added to the mask. A mask can be randomly generated, as an effect confusing an automated agent.

A mask can extend beyond the content, can cover the whole content or certain parts of the content. Those skilled in the art will recognize that said mask can be implemented and displayed using various techniques from, including but not limited to, 2D graphics, 3D graphics, pixel art, vector graphics, animation.

According to a further embodiment of the present invention, additional steps are performed that can be used in other steps, including: interrogating the user system to determine different parameters (e.g., resolution of the display, language) and/or interrogating the user to establish user preferences. For example, challenge properties can be established based on user settings. Alternatively, the properties may be determined based on communication characteristics.

In various embodiments, distortion may be used as part of the generation algorithm so that the challenge is easy to solve by a human and hard to solve by a computer program. Examples of simple distortions may include: translation, displacing, clipping, merging, flipping, mirroring, rotations, transposing, warping, stretching and skewing. In various embodiments, the generation step may include: use of multiple colors, use of transparency, use of different fonts, use of animation, use of images or other media types. It is to be understood that other types of effects can be applied when generating the challenge elements like erosion, colorize and dilation.

At step 404, the challenge may be presented on a client device. The challenge may be presented on as a layer covering all or some portion of the content. In other embodiment, the layer may extend beyond the content. Furthermore, the challenge may be presented with more than one layer. For example, a layer with one or more elements, the elements present in that layer have a similar behaviour (e.g., appear/disappear all together, must be answered all or all at once to pass). Furthermore, the challenge may be presented by embedding (e.g., overlaying, merging) partial or all of the challenge elements or layers into the content.

In other example, the challenge may deliver audio and/or video content, such as: commercials, spoken instructions, keywords. A synthesizing module may be used to deliver spoken content.

Furthermore, an animation may be used in the process of presenting the challenge. Moreover, transition effects from one element to the next or previous may be used in an embodiment (e.g., fading in and out, focusing, coloring, resizing, changes of position, hiding, unhiding).

At step 406, a response inputted by a user may be received. In an embodiment, a user may be required to input one or more characters according to a human-perceptible content. In some embodiments, a user may be required to interact with the challenge elements or content such as clicking, double-clicking, tapping, touching, slapping touch, flick gesture, pointing, dragging, dropping, tracing, selecting, deselecting, resizing, positioning, repositioning, rotating, device orientating, device moving, coloring, upload file or other type of interaction. By the term interaction it also can be understood a single interaction or mix of interactions, including but not limited to simultaneous interactions with/without timeouts and/or sequential interactions with/without timeouts. Alternative way to input an answer is by speech, for instance, the user spells the answer or an instruction.

At step 408, response input by the user may be evaluated. In one embodiment, to validate the user response, the user response is compared to a predefined answer. The response from the user can contain at least in part a user interaction, which may be compared to a predefined interaction. One approach to verify the answer is to provide a table of acceptable answers. Satisfactory variations may be considered, for instance homonyms. Also, some answer may be based on synonyms, antonyms or hyponyms. Automatic speech recognition module (ASR) that can provide transcription of user speech, spoken language understanding module (SLU) for analyzing the meanings of a natural language sentence or words, spoken language generation module (SLG) or optical character recognition (OCR) for analyzing the writings from the user may be incorporated in the challenge. For example, the user may read the answer instead of typing it and/or may give a spoken instruction instead of interacting by other device.

The next step 410 can contain at least one of: the step of validation the user (e.g., granting access to a resource or service) and/or the step of accepting the user as human and/or the step of providing incentives. In case of a failure at step 408, blocking the user (e.g., deny access to a resource or service, suspend/terminate a communication) and/or adding to a list are performed at the step 410.

In an embodiment, if the user answer is valid then the desired actions by the user are enabled, such as assign for an account (e.g., email account), insert an input in a poll, login, using a search engine, inserting content (e.g., inserting comments in chat room or forum, upload files) and/or accessing data or other service on a website. Incentives can be provided to the user or other party, such as rights, credit, privileges, status.

An additional step can be performed, especially when the content is an advertisement. The step could be one of: testing the awareness of a content, determining effectiveness measure for the presented challenge, provide credit.

Effectiveness measure may be determined by tracking the revenue value realized after the user makes a financial or communication transaction (e.g., follows a link provided in the advertisement, buys a product or service).

When the challenge relating to an advertisement content is attempted or correctly answered, a value associated with viewing the advertisement may be credited to a user account, either locally or at a clearinghouse or other party. For example, a cost per impression (CPM) or other type of cost can be recorded after the user attempts the challenge.

If the user's solution is not valid, then the method described in FIG. 4 could be repeated: to the user is presented another challenge to solve. In some implementations, the user may be given only a limited time to solve a challenge or a limited number of tries before the requested challenge expires.

A notification of the verification may be output at step 410 to the user or third party. For example, if the characters inputted in each input displayed to the user are the same as the characters of the predefined answer, an indication of success may be sent to the client device. If a failure is detected an indication of failure may be outputted. For example, a message may be sent to the client device, or effects (e.g., coloring, blinking, animation, focusing, pointing, changes in shape or position, etc.) may be performed on some or all elements. In various embodiments, the challenge generator may generate for presentation a new challenge element until a correct answer is received from the client.

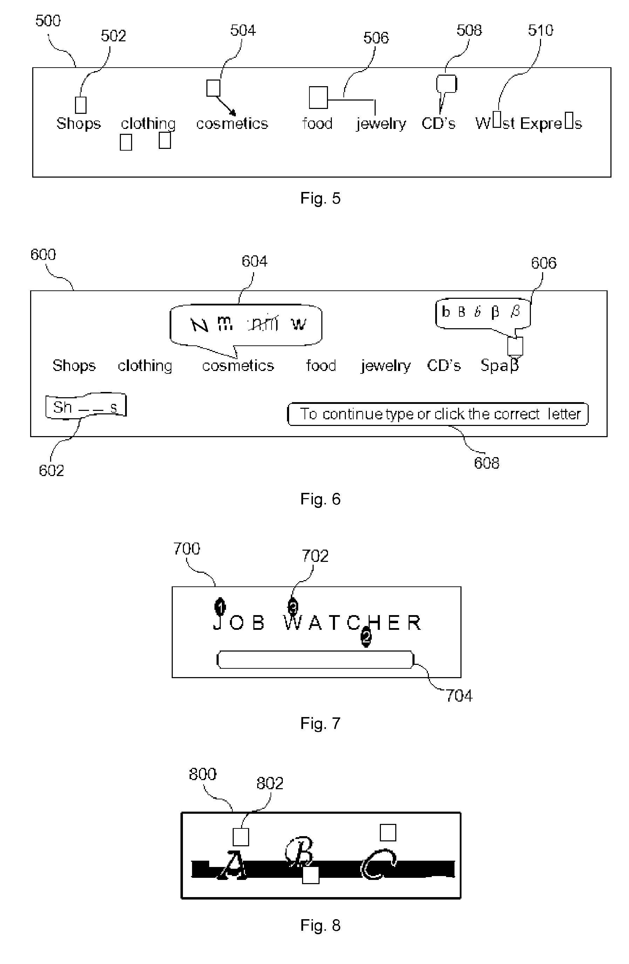

In FIG. 5 are depicted different challenge input elements and different challenge indication elements in accordance with various embodiments of present invention. 500 shows a text content. 502 is an example of a text input that is displayed on the content. The user can deduce from the context of input 502 that the letter'o' is the answer. On the content 500 are represented three of such inputs. The inputs can appear all at a certain time, or over time, for example, at predefined time delay, at random/pseudo-random delay or after an user interaction.

504 represents an input that has an associated indication in form of an arrow. The indication can help the user to establish the correct answer. The arrow may show that the letter 'e' is the correct answer.

506 and 508 are other example of inputs that have associated indications. In some situations, the indication and the input appear visible merged.

510 shows an input that hides a letter. The input can also hide a group of letters or areas of the content. The user awareness of a certain slogan, brand may be tested. Optionally, the letters or group of letter located below the input can be redisplayed/bring above so that the user can see the answer.

Alternatively, some input or indication properties can be modified by the user. For example, regarding the input and associated indication 504, the whole input or just the arrow can be repositioned by the user at a different letter.

FIG. 6 shows various examples of inputs and indications created based on text content 600, in accordance with other embodiments of present invention. In an embodiment, the challenge element may contain a part of the answer, displayed as text, image, obfuscated image or other type of media. The user may input the other part of the answer. The user may deduce from the context of input 602 that the letters 'op' are missing.

604 is another type of input according to an embodiment. The input 604 may contain distortion image or other type of media. Alternative answers may be displayed, none, one or more being the correct answer. The user may input the answer by interacting with the input (e.g., by clicking, by touching).

In another example, the input 606 may allow the user to insert the answer by either typing or interacting with the suggestion. 608 is an indication independent from any input that contains an instruction to be followed by the user.

FIG. 7 is a diagram illustrating another example of inputs and indications in accordance with an embodiment of the present invention. On the content 700 are displayed three indications of the same type as 702 and one input 704. The indication 702 may suggest where the user may find the answer. Furthermore, the indications may suggest the correct sequence when constructing the answers.

FIG. 8 is a diagram illustrating a simplified example of inputs displayed on a CAPTCHA image (seen as content) in accordance with an embodiment of the present invention. In prior art the CAPTCHA image usually asked the user to enter an answer in a single input. To make a CAPTCHA stronger, on the CAPTCHA image 800 three inputs, same type as 802, are displayed over the image.

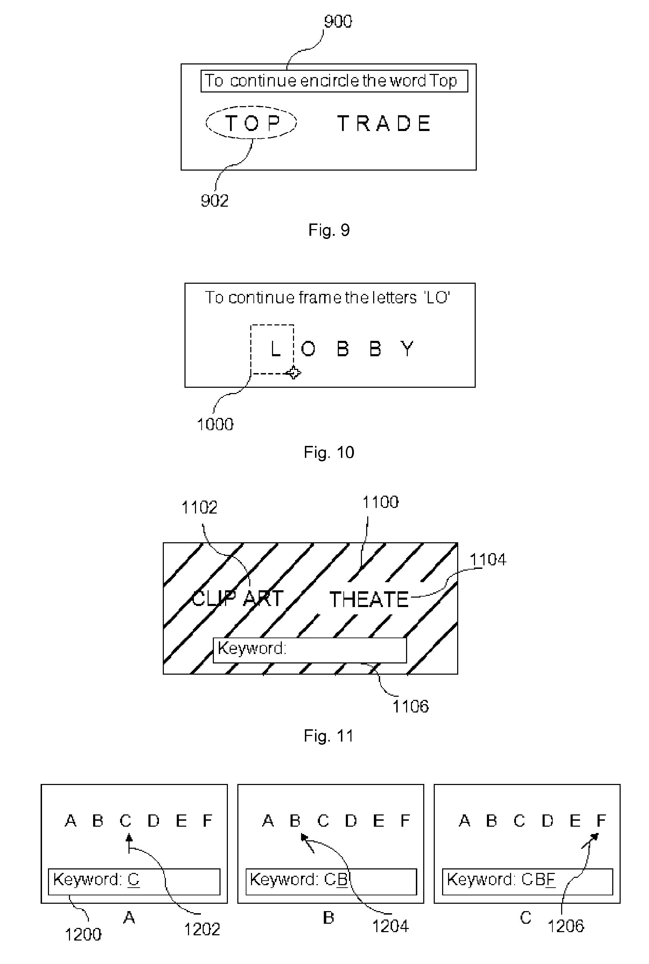

FIG. 9 is a diagram illustrating another example of a challenge in accordance with an embodiment of the present invention. An indication may ask the user to do an interaction on a region of the content. The indication 900 asks the user to encircle a word. The input from the user consists of the movement of a cursor. Further, the indication 902 is displayed to suggest a certain path.

FIG. 10 is a diagram illustrating a simplified example of an input that supports dragging. The user may move and/or resize the input 1000 with the scope to frame a region of the content. The input may be valid if a predefined region is partially or completely framed.

FIG. 11 is a diagram illustrating a simplified example of a challenge that uses a mask. In this example, after applying the mask 1100, the word 1102 appears masked, while the word 1104 appears unmasked. Based on what is masked/unmasked or what is highlighted or other effects, the user may deduce the answer. In this example, the word 1104 may be inputted as an answer in the input box 1106.

In another embodiment the user can interact with the mask and can modify the mask properties. For example the user is asked to drag and resize one area of the mask so that a certain portion of the content is highlighted or unmasked.

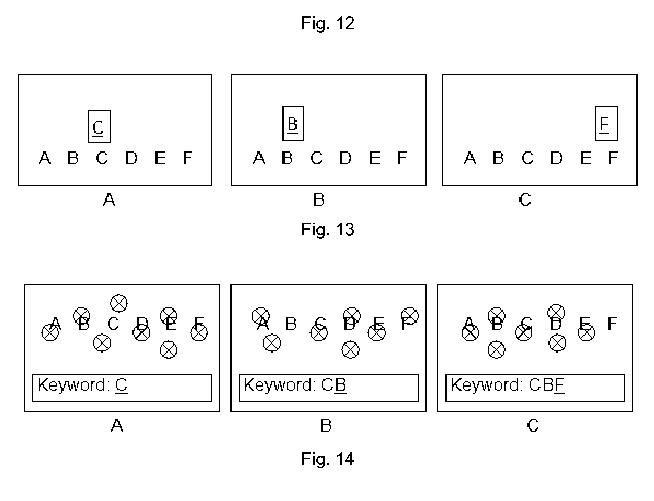

FIGS. 12, 13, 14 are diagrams illustrating simplified examples according to another embodiments. The challenge is presented to the user as a sequence of steps. In one embodiment, to continue to the next step, the user must pass the current step by providing a partial answer. A partial answer could mean an input and/or an interaction with the challenge elements or content. Furthermore, partial answer could mean a valid input and/or a valid interaction.

In another embodiment, the second step is performed after a predefined time delay or random/pseudorandom time delay from the presentation of the first step or from other event (e.g., after a user gives a partial answer). In another embodiment, moving to the next step is performed if this is required by the user or other service, including the one that provides the challenge.

It is also possible that the content may vary at each step. For example, at the first step a first advertisement is presented, at the second step a different advertisement is presented.

Referring to FIGS. 12, 13, 14, at step A of each figure, a challenge element is used to suggest the correct answer. After a partial answer is provided or after a time delay, at step B a different challenge element is used to suggest the next partial answer. The challenge may continue with another step, for example step C.

In FIG. 12 the user answer is collected in the input box 1200. At step A, the challenge uses the indication 1202 to suggest an answer. For example, the letter 'C' may be inputted. At step B, the indication 1204 is used to suggest an answer. At step C, the indication 1206 is used to suggest an answer.

In FIG. 13 the challenge element that varies at each step is an input. For example, the position of the input is changed at each step.

With reference to FIG. 14, another embodiment is presented. The challenge consists of consequent steps. Each step is different from the other by the used mask.

The number of steps can be a predefined value, a random value or can be dynamically established. For example, the number of steps can be established based on the validity of each answer the user gives and/or time to answer.

After a user completes a step some action on the challenge element used in previous step can be applied (e.g., delete, hide, resize, shadow, colorize, send to background) or the challenge element can be left as it is.

## Claims

1. A method for providing a challenge to a user, the method comprising:
generating a challenge with one or more elements based on a content;
presenting the challenge to the user;
receiving a response to the challenge;
evaluating the answer from the user.

2. The method of claim1, wherein an element can be an input, an indication, a mask, an audio content or a video content.

3. The method of claim1, wherein after the step of evaluating the answer an additional step is performed, comprising at least one of:
blocking the user,
validating the user,
adding to a list,
accepting the user as human,
provide incentive(s),
send notification(s).

4. The method of claim1, wherein an additional step is performed, comprising at least one of:
testing the awareness of a content,
determining effectiveness measure for the presented challenge,
provide credit.

5. The method of claim 1, wherein the content includes at least one of: advertisement, character, word, graphic, image, video, sound, interactive media, multimedia, two-dimensional media, three-dimensional media, CAPTCHA image, link.

6. The method of claim 1, wherein the step of generating the challenge involves determining at least one of a challenge property, a predefined answer based on partial or fully knowledge of a content.

7. The method of claim 6, wherein challenge property could be one of: number of elements, type of elements, presentation procedure, evaluation procedure, position of an element, shape of an element, orientation of an element, size of an element, composition of an element, style of an element, stack order of an element, visibility of an element, alternative text of an element.

8. The method as claimed in claim 1, wherein a challenge element includes at least one of: alternative answer, partial answer, suggestion of the correct answer, suggestion of the correct sequence of answers, instruction, question, dummy content;

9. The method of claim 1, wherein the challenge requires the user to input one or more characters according to the context of a presented challenge element.

10. The method of claim 1, wherein the response from the user can contain at least in part a user interaction with the content and/or challenge elements; to validate the user response, the user interaction is compared to a predefined interaction.

11. The method of claim 1, wherein at least one challenge property can be modified by the user.

12. The method of claim 1, wherein the step of presenting the challenge to the user comprises the steps of:
presenting one or more elements at a first time;
presenting one or more elements at a second time.

13. The method of claim 12, wherein the step of presenting the elements at a second time is not performed until at least one of is true: partial response is received from the user corresponding to the first step, a predefined time delay or random time delay has elapsed.

14. The method of claim 12, wherein the content varies at least at one step.

15. The method of claim 1, wherein at least one part of a challenge is embedded in a content.

16. A computer system for providing a challenge based on a content, as part of at least one of a web page, a instant messaging application, a voice communication application, a video communication application, a conference application, a file sharing application, a desktop application or as part of other computer program, comprising:
means for generating a challenge with one or more elements;
means for presenting the challenge to the user;
means for receiving a response to the user challenge;
means for evaluating the answer.
